(19) Europäisches Patentamt
European Patent Office
Office européen des brevets

(11) **EP 3 598 369 A1**

(12) **EUROPEAN PATENT APPLICATION**
published in accordance with Art. 153(4) EPC

(43) Date of publication:
**22.01.2020 Bulletin 2020/04**

(21) Application number: **18768565.6**

(22) Date of filing: **05.03.2018**

(51) Int Cl.:
*G06Q 30/00* (2012.01)    *B60C 19/00* (2006.01)
*G06Q 10/00* (2012.01)

(86) International application number:
**PCT/JP2018/008254**

(87) International publication number:
**WO 2018/168540 (20.09.2018 Gazette 2018/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.03.2017 JP 2017049810**

(71) Applicant: **Bridgestone Corporation
Tokyo 104-8340 (JP)**

(72) Inventors:
• OKI, Futoshi
  **Tokyo 104-8340 (JP)**
• IKENOMOTO, Ayaka
  **Tokyo 104-8340 (JP)**

(74) Representative: **Oxley, Robin John George
Marks & Clerk LLP
15 Fetter Lane
London EC4A 1BW (GB)**

(54) **TIRE MAINTENANCE SUPPORT SYSTEM, TIRE MAINTENANCE SUPPORT PROGRAM, AND TIRE MAINTENANCE SUPPORT METHOD**

(57)    A tire maintenance support system (100) includes a wear progress degree acquisition portion (110) that acquires a wear progress degree of each of a tread and a side portion in each mount position, a wear amount calculation portion (120) that calculates a predicted wear amount, which is a wear amount of each of the tread and the side portion in each mount position until maintenance timing when maintenance of the vehicle is performed, based on the acquired wear progress degree, and a re-tread member selection portion (140) and a re-side member selection portion (150) that select a thickness of a member to be needed when at least one of the tread and the side portion is replaced, based on the calculated predicted wear amount.

FIG. 1

**Description**

[Technical Field]

The present invention relates to a tire maintenance support system, a tire maintenance support program, and a tire maintenance support method that support maintenance of a tire mounted to a predetermined position of a vehicle.

[Background Art]

In recent years, a solution business combining a tire sale and maintenance thereafter has been paid attention instead of a conventional business only selling a tire, especially a pneumatic tire for trucks or buses (hereinafter, called a tire). Accordingly, customers can get benefit to reduce a cost and a management man-hour and thereby regular customers for a tire manufacturer are increased, so that improvement of competitive power of the tire manufacturer is expected.

The maintenance after selling the tire includes management of inner pressure, rotation in mount positions of tires, and re-tread that replaces a worn tread (for example, Non Patent Literature 1).

[Citation List]

[Non Patent Literature]

[Non-PTL 1] "Tire solution: Eco Value Pack, What is Eco Value Pack?" searched online on February 28, 2017, URL: https://tire.bridgestone.co.jp/tb/truck_bus/solution/eco_value/index.ht ml

[Summary of Invention]

In recent years, it is desired to improve so-called precision docking of a route bus in which passengers repeatedly gets on or off at bus stops. The precision docking denotes a degree of a distance and a degree of a level difference between a sidewalk and a doorway when the bus stops at a bus stop. The getting on/off performance is enhanced by improving the precision docking, and therefore barrier-free can be sufficiently enhanced.

However, when the precision docking is improved, a surface of a side portion (side wall) of a tire is rubbed with a curbstone of a sidewalk and a side portion is severely worn.

That is, in the solution business described above, in addition to the conventional maintenance of the worn tread, maintenance the worn side portion is required to be appropriately performed. Specifically, rotation in mount positions of the tires considering the wear of the tread and the side portion, replacement of the worn tread and the worn side portion (re-tread and re-side), and the like are required to be appropriately performed.

Further, operation entities of the route buses (bus company or the like) want to minimize a time (downtime) in which the bus (vehicle) is unavailable in the bus service due to the maintenance, and therefore the maintenance of the tire is required to be performed at the same timing as the maintenance of the vehicle (legal inspection or the like).

Accordingly, an object of the present invention is, in consideration of the problem described above, to provide a tire maintenance support system, a tire maintenance support program, and a tire maintenance support method capable of supporting appropriate maintenance of tires considering wear of a tread and a side portion while minimizing downtime of a vehicle due to the maintenance.

A tire maintenance support system according to one aspect of the present invention is formed to support maintenance of tires mounted to predetermined positions in a vehicle having a plurality of mount positions. The tire maintenance support system includes a wear progress degree acquisition portion (wear progress degree acquisition portion 110) that acquires a wear progress degree of each of a tread and a side portion in each mount position, based on a wear amount of the tire mounted to the predetermined position within a predetermined period, a wear amount calculation portion (wear amount calculation portion 120) that calculates a predicted wear amount, which is a wear amount of each of the tread and the side portion in each mount position until maintenance timing when maintenance of the vehicle is performed, based on the wear progress degree acquired by the wear progress degree acquisition portion, and a rotation plan selection portion (rotation plan selection portion 130) that selects at least one rotation plan, which is a plan for switching the tire mounted at the predetermined position into another mount position, among the rotation plans, based on the predicted wear amount calculated by the wear amount calculation portion. The rotation plan selection portion selects a rotation plan in which a total of the predicted wear amounts of the tread and the side portion in each tire is maximum.

A tire maintenance support system according to one aspect of the present invention is formed to support maintenance of tires mounted to predetermined positions in a vehicle having a plurality of mount positions. The tire

**EP 3 598 369 A1**

maintenance support system includes a wear progress degree acquisition portion that acquires a wear progress degree of each of a tread and a side portion in each mount position, based on a wear amount of the tire mounted to the predetermined position within a predetermined period, a wear amount calculation portion that calculates a predicted wear amount, which is a wear amount of each of the tread and the side portion in each mount position until maintenance timing when maintenance of the vehicle is performed, based on the wear progress degree acquired by the wear progress degree acquisition portion, and a rotation plan selection portion that selects at least one rotation plan, which is a plan for switching the tire mounted at the predetermined position into another mount position, among the rotation plans, based on the predicted wear amount calculated by the wear amount calculation portion. The rotation plan selection portion selects a rotation plan in which the sum of the differences between the predicted wear amount of the tread and the predicted wear amount of the side portion in the tires, which are mounted to the respective mount positions, is minimum.

A tire maintenance support system according to another aspect of the present invention is formed to support maintenance of tires mounted to predetermined positions in a vehicle having a plurality of mount positions. The tire maintenance support system includes a wear progress degree acquisition portion that acquires a wear progress degree of each of a tread and a side portion in each mount position, based on a wear amount of the tire mounted to the predetermined position within a predetermined period, a wear amount calculation portion that calculates a predicted wear amount, which is a wear amount of each of the tread and the side portion in each mount position until maintenance timing when maintenance of the vehicle is performed, based on the wear progress degree acquired by the wear progress degree acquisition portion, and a replacement member selection portion that selects a thickness of a member to be needed when at least one of the tread and the side portion is replaced, based on the predicted wear amount calculated by the wear amount calculation portion. In a case in which the predicted wear amount exceeds a predetermined limit value, the replacement member selection portion selects the thickness of the member corresponding to a difference between the predetermined limit value and the predicted wear amount.

Further, the tire maintenance support system described above may be implemented by a tire maintenance support program (also called a tire maintenance support program product) or a tire maintenance support method. Further, a non-transitory computer readable medium that stores the tire maintenance support program may be provided.

[Brief Description of Drawings]

[Fig. 1] Fig. 1 is a functional block diagram illustrating a tire maintenance support system 100.
[Fig. 2] Fig. 2 is a schematic perspective view illustrating a bus 10 to which a tire 30, which is a target of the tire maintenance support system 100, is mounted.
[Fig. 3] Fig. 3 is a view for describing an axle configuration of the bus 10.
[Fig. 4] Fig. 4 is a cross-sectional view along a tire width direction and a tire radial direction illustrating a part of the tire 30.
[Fig. 5] Fig. 5 is a flow chart illustrating a wear amount prediction flow of the tire 30.
[Fig. 6] Fig. 6 is a flow chart illustrating a selective flow (operation example 1) of a rotation plan of the tires 30.
[Fig. 7] Fig. 7 is a flow chart illustrating a selective flow (operation example 2) of a rotation plan of the tires 30.
[Fig. 8] Fig. 8 is a flow chart illustrating a decision operation flow of a re-tread amount and a re-side amount.
[Fig. 9] Fig. 9 is a graph illustrating a predicted wear amount in each mount position in the bus 10.
[Fig. 10A] Fig. 10A is a view illustrating a rotation example (operation example 1) of the tires 30.
[Fig. 10B] Fig. 10B is a view illustrating the rotation example (operation example 1) of the tires 30.
[Fig. 11] Fig. 11 is a graph illustrating a predicted wear amount in each mount position when the rotation of the tires 30 according to the rotation plan of the operation example 1 is performed.
[Fig. 12A] Fig. 12A is a view illustrating a rotation example (operation example 2) of the tires 30.
[Fig. 12B] Fig. 12B is a view illustrating the rotation example (operation example 2) of the tires 30.
[Fig. 13] Fig. 13 is a graph illustrating a predicted wear amount in each mount position when the rotation of the tires 30 according to the rotation plan of the operation example 2 is performed.
[Fig. 14] Fig. 14 is a view illustrating a display example of necessary amounts of the re-tread and the re-side.

[Description of Embodiments]

Hereinafter, an embodiment of the present invention will be described with reference to the drawings. The same reference signs or similar reference signs are assigned to the same functions or the same components and the description thereof is omitted as needed.

3

(1) Schematic whole configuration of tire maintenance support system

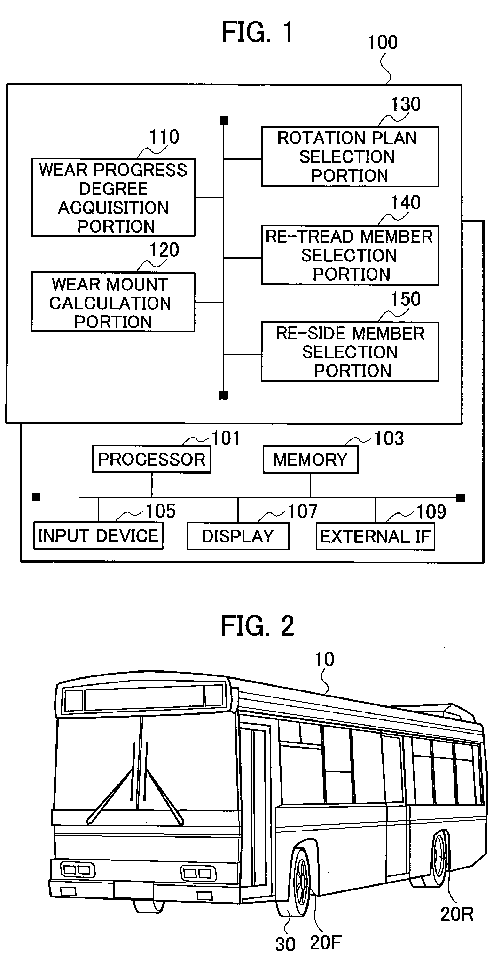

Fig. 1 is a functional block diagram illustrating a tire maintenance support system 100. The tire maintenance support system 100 is formed to support maintenance of a tire mounted to a vehicle such as a bus, especially a route bus that repeatedly stops at bus stops. Specifically, the tire maintenance support system 100 supports the maintenance of the tire mounted to either one of mount positions (predetermined position) of the vehicle having a plurality of the mount positions for the tires.

Fig. 2 is a schematic perspective view illustrating a bus 10 to which a tire 30, which is a target of the tire maintenance support system 100, is mounted. As shown in Fig. 2, the bus 10 is a vehicle having two axles of a front axle 20F and a rear axle 20R. A plurality of the tires 30 is mounted to each of the front axle 20F and the rear axle 20R. A type of the bus 10 and a size of the tire 30 are not especially limited. Example of the size of the tire 30 mounted to the bus 10 includes 275/70R22.5. Further, other size (for example, 245/70R19.5) may be adopted.

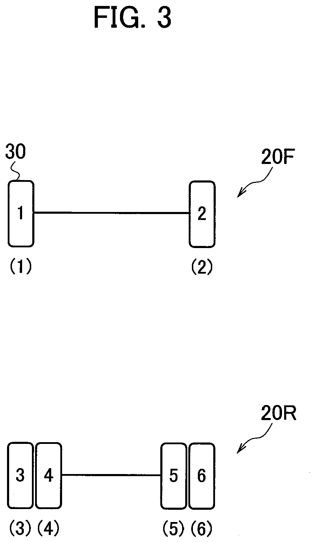

Fig. 3 is a view for describing an axle configuration of the bus 10. As shown in Fig. 3, the front axle 20F is served as a steering axle. The tire 30 identified as Tire 1 is mounted to a mount position #1 (POS. 1, a position of a left front wheel shown as a position (1) in the figure). Similarly, the tire 30 identified as Tire 2 is mounted to POS. 2 (a position of a right front wheel shown as a position (2) in the figure). In the present embodiment, the vehicles are supposed to travel on the left side.

The rear axle 20R is served as a driving axle. The tires 30 identified as Tire 3 to 6 are mounted to POS. 3 to 6 (a left outside rear wheel, a left inside rear wheel, a right inside rear wheel, and a right outside rear wheel, shown by positions (3) to (6) in the figure), respectively.

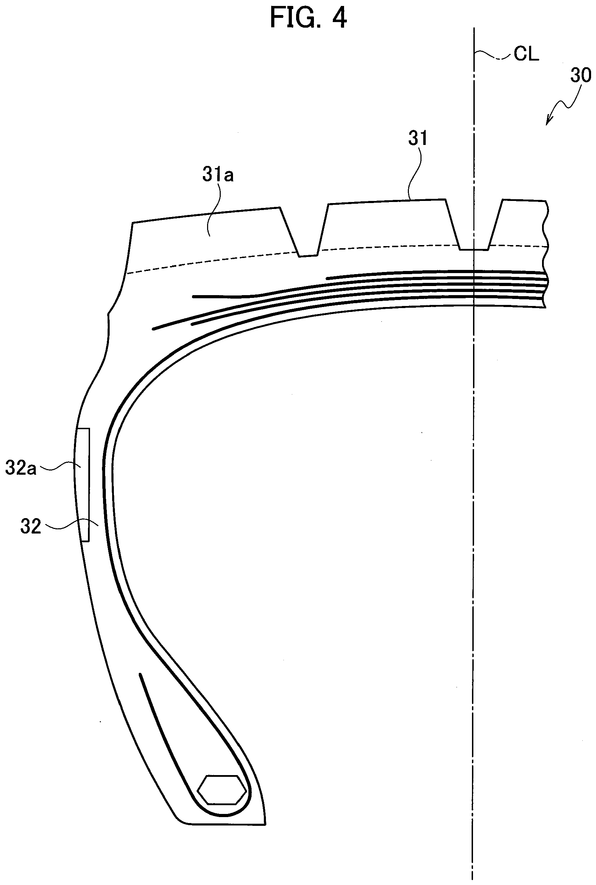

Fig. 4 is a cross-sectional view along a tire width direction and a tire radial direction illustrating a part of a tire 30. One side of the tire with respect to a tire equatorial line CL in the tire width direction is illustrated in Fig. 4.

As shown in Fig. 4, the tire 30 is provided with a tread 31 that contacts a road surface, a side portion 32 located at an inner side in the tire radial direction with respect to the tread 31 so as to form a side surface portion of the tire 30. The tire 30 is adapted to the re-tread that replaces the worn tread 31. Further, the tire 30 is adapted to the re-side that replaces the worn side portion 32.

A re-tread portion 31a is a target of the re-tread. A re-side portion 32a is a target of the re-side. Further, the re-side portion 32a may be formed to be protruded toward an outer side in the tire width direction more than a surface of the side portion 32.

As shown in Fig. 1, the tire maintenance support system 100 is provided with a wear progress degree acquisition portion 110, a wear amount calculation portion 120, a rotation plan selection portion 130, a re-tread member selection portion 140, and a re-side member selection portion 150.

These functional blocks are implemented by executing a computer program (software) on hardware such as a server computer. Specifically, the tire maintenance support system 100 is provided with a processor 101, a memory 103, an input device 105, a display 107, and an external IF 109 as hardware components. Further, the computer program (software) may be stored in a storage medium, which can be read by a computer, such as an optical disk, a hard disk drive, and a flash memory.

The wear progress degree acquisition portion 110 acquires a wear progress degree of the tire 30 mounted to the bus 10. Specifically, the wear progress degree acquisition portion 110 acquires a wear amount within a predetermined period of each of the tires 30 mounted to POS. 1 to 6 (predetermined positions).

The predetermined period is not especially limited as long as the wear progress degree, namely a tendency of the wear, of the tire 30 in each mount position can be recognized. The predetermined period is preferably set to several days to one month depending on a travelling distance of the bus 10. Further, the predetermined period may be defined as a trial period for the tire maintenance service in the operation entity (bus company or the like) of the bus 10.

The wear progress degree acquisition portion 110 acquires a wear state of each of the tread 31 and the side portion 32 of the tire 30 mounted to the bus 10 that traveled for the predetermined period. Specifically, the wear progress degree acquisition portion 110 acquires the wear amount based on a remaining groove depth, and presence of uneven wear.

The wear progress degree acquisition portion 110 may acquire data, which indicates the wear state, stored in a measurement device that measures the remaining groove depth, through the external IF 109 (through communication network), or may acquire the data input by a user of the tire maintenance support system 100 (hereinafter, merely a user) using the input device 105.

The wear progress degree acquisition portion 110 acquires the wear progress degree of each of the tread 31 and the side portion 32 in each mount position based on the data indicating the acquired wear amount and the presence of the uneven wear.

The wear progress degree denotes the wear amount (for example, unit of millimeter (mm)) of each of the tread 31 and the side portion 32 in a predetermined unit time (for example, one month). For example, the wear progress degree denotes an incline (a) in a linear function of $y = ax$. The wear progress degree may not be the linear function, however in the present embodiment, the wear progress degree is described as the linear function. The wear progress degree may be also called severity.

Further, the wear progress degree acquisition portion 110 may acquire the wear progress degree of the tire 30 by executing a program substantially similar to, for example, a wear test program disclosed in JP 2012-098251 A. Specifically, the wear progress degree acquisition portion 110 can acquire the wear progress degree by calculating the wear amount of tire 30 in accordance with the travelling state of the bus 10 based on a travelling speed of the bus 10, a ratio of straight travelling and turn travelling, an average turning radius, a degree of acceleration and deceleration, an average steering angle, a load, tire inner pressure, temperature, and a road surface state (type of pavement or the like). Further, in the wear test program disclosed in JP 2012-098251 A, the data of the vehicle travelling on a test course is adopted, while in the present embodiment, the data of the bus 10 travelling on an actual road (road of the route bus) is adopted.

Further, the wear progress degree acquisition portion 110 may acquire the wear amount of the tire 30 measured at the maintenance timing when the maintenance of the bus 10 (vehicle) is performed.

The wear amount calculation portion 120 calculates a predicted wear amount based on the wear progress degree acquire by the wear progress degree acquisition portion 110. The predicted wear amount denotes a wear amount of each of the tread 31 and the side portion 32 in each mount position, generated until the maintenance timing when the maintenance of the bus 10 (vehicle) is performed.

Further, the maintenance timing denotes timing when any kind of maintenance operation is performed to the bus 10 (a fixed date, or a certain period such as one or several weeks), and therefore the bus 10 is unavailable in bus service at the maintenance timing.

The maintenance timing typically includes the timing of the legal inspection (every 3 months or 12 months), however it is not limited to this. For example, the maintenance timing (for example, every 1 month) voluntarily defined by the operation entity of the bus 10 may be adopted. Further, it is preferable that the maintenance timing is set in advance.

The wear amount calculation portion 120 calculates the predicted wear amount in each mount position generated until the maintenance timing, based on the wear progress degree acquired by the wear progress degree acquisition portion 110. A specific calculation method for the predicted wear amount is further described below.

The rotation plan selection portion 130 selects an appropriate rotation plan among rotation plans. The rotation plan is a plan for switching the mount positions of the tires 30 mounted to the bus 10.

For example, the rotation plan indicates to switch the tire 30 presently mounted at POS. 2 (predetermined position) into POS. 1 (other mount position). The rotation plan similarly indicates to switch the tires mounted at other mount positions into positions to be mounted.

In the present embodiment, the rotation plan selection portion 130 selects the appropriate rotation plan on the basis of the predicted wear amount calculated based on the wear progress degree (severity) in each mount position.

Specifically, the rotation plan selection portion 130 selects at least one rotation plan among the rotation plans (maximum 720 combinations in the present embodiment), based on the predicted wear amount calculated by the wear amount calculation portion 120. That is, in a case in which a plurality of appropriate rotation plans is present, the rotation plan selection portion 130 selects one rotation plan among the appropriate rotation plans.

Here, the rotation plan selection portion 130 may display the rotation plans so that a user can select one rotation plan, or alternatively the rotation plan selection portion 130 may select one rotation plan arbitrarily or in accordance with a predetermined criterion. For example, the rotation plan selection portion 130 may select a plan in which a moving amount (distance) of the tire 30 in the rotation is minimum, in other words a plan in which an operation load is minimum.

Further, in the present embodiment, the rotation plan selection portion 130 may select the rotation plan in which the total $W_{T+S}$ of the predicted wear amounts of the tread 31 and the side portion 32 in the tire 30 is maximum.

Further, the rotation plan selection portion 130 may select the rotation plan in which the sum $\delta$ of the differences between the predicted wear amount of the tread 31 and the predicted wear amount of the side portion 32 in the tires 30 mounted to respective mount positions is minimum.

The re-tread member selection portion 140 selects a member to be needed for the re-tread, based on the predicted wear amount calculated by the wear amount calculation portion 120. Specifically, the re-tread member selection portion 140 selects a rubber for the re-tread used in the re-tread portion 31a (see Fig. 4).

In the present embodiment, the rubbers for the re-tread having different thicknesses in the tire radial direction are prepared. Examples of the thickness include 3 mm, 6mm, ···, and 15mm. A kind of the rubber for the re-tread may directly indicate the thickness thereof, or may indicate a type thereof. In a case in which the kind of the rubber for the re-tread indicates the type thereof, the re-tread member selection portion 140 selects the rubber for the re-tread having a certain thickness among the rubbers for the tread having different thicknesses by choosing the type. That is, the re-tread member selection portion 140 selects the thickness of the member regardless of a directly or indirectly manner.

The re-side member selection portion 150 has a similar function to the re-tread member selection portion 140. The re-side member selection portion 150 selects a member to be needed for the re-side, based on the predicted wear amount calculated by the wear amount calculation portion 120. Specifically, the re-side member selection portion 150 selects a rubber for the re-side used in the re-side portion 32a of the tire 30.

Similar to the rubbers for the re-tread, the rubbers for the re-side having different thicknesses in the tire width direction are prepared. Further, the rubber for the re-side may not be formed of a rubber material, and therefore the rubber for the re-side may be formed of a synthetic resin material.

In the present embodiment, the re-tread member selection portion 140 and the re-side member selection portion 150 are served as a replacement member selection portion that selects the thickness of the member to be needed when the member for either or both of the tread 31 and the side portion 32 are replaced, based on the predicted wear amount calculated by the wear amount calculation portion 120.

In a case in which the predicted wear amount exceeds a predetermined limit value TH, each of the re-tread member selection portion 140 and the re-side member selection portion 150 selects the thickness of the member corresponding to the difference between the predetermined limit value TH and the predicted wear amount.

Further, in a case in which the predicted wear amount exceeds the predetermined limit value TH in the rotation plan selected by the rotation plan selection portion 130, each of the re-tread member selection portion 140 and the re-side member selection portion 150 may select the thickness of the member corresponding to the difference between the predetermined limit value TH and the predicted wear amount.

Further, the re-tread member selection portion 140 may designate the difference between the predetermined limit value TH and the predicted wear amount, namely the difference itself, as the thickness of the member.

Here, when selecting the thickness of the member, each of the re-tread member selection portion 140 and the re-side member selection portion 150 may not select the thickness as same as the difference but select the thickness to which a slight margin is added.

Further, each of the rubber for the re-tread and the rubber for the re-side may be prepared to adapt to a so-called precure method (cold re-tread (re-side)) using a vulcanized rubber or a so-called remold method (hot re-tread (re-side)) using an unvulcanized rubber.

(2) Operation of tire maintenance support system

Next, operation of the tire maintenance support system 100 will be described. Specifically, a calculation operation of the predicted wear amount, a selection operation of the rotation plan, and a calculation operation of the necessary re-tread amount and the necessary re-side amount by means of the tire maintenance support system 100 will be described.

(2. 1) Calculation of the predicted wear amount

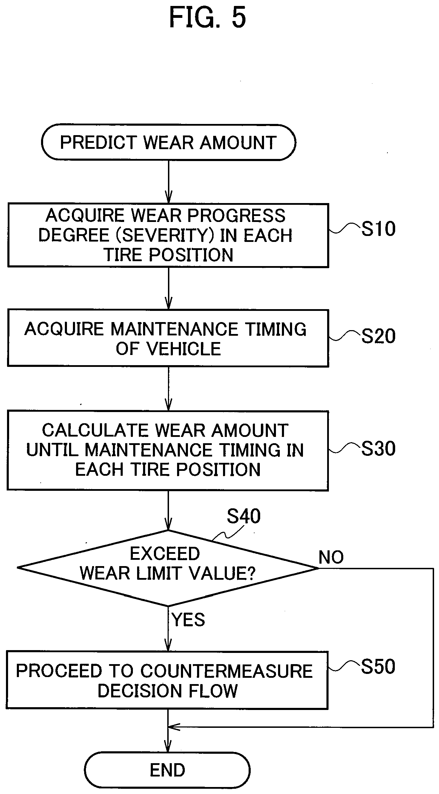

Fig. 5 is a flow chart illustrating a wear amount prediction flow of the tire 30. As shown in Fig. 5, the tire maintenance support system 100 acquires the wear progress degree (severity) in each mount position (POS. 1 to 6, see Fig. 3) in the bus 10 (S10).

Specifically, the tire maintenance support system 100 acquires the wear amount (for example, unit of millimeter (mm)) of each of the tread 31 and the side portion 32 in a predetermined unit time (for example, one month).

Further, the tire maintenance support system 100 acquires the maintenance timing (t1, t2) of the bus 10 (vehicle) (S20). The tire maintenance support system 100 may acquire the maintenance timing (t1, t2) through the external IF 109 (through communication network), or may acquire the maintenance timing input by a user using the input device 105. The processes of S10 and S20 may be executed in an opposite order.

The tire maintenance support system 100 calculates the predicted wear amount in each mount position until the maintenance timing (t1, t2) (S30). Specifically, the tire maintenance support system 100 calculates the predicted wear amount in each mount position until the maintenance timing t1 and the maintenance timing t2, based on the acquired wear progress degree (tread 31 and side portion 32).

The tire maintenance support system 100 determines whether the calculated predicted wear amount in each mount position exceeds the predetermined limit value TH (wear limit value) (S40). Here, the predetermined limit value TH indicates a limit value of the wear amount decided by considering an operation state or the like of the bus 10, and therefore the predetermined limit value TH is not always limited to a use limit of the tire 30. That is, the predetermine limit value TH can be set to any value, and the tire maintenance support system 100 determines that the wear amount exceeds the predetermined limit value TH when a certain amount of the wear is generated.

When the predicted wear amount in each mount position exceeds the predetermined limit value TH, the tire maintenance support system 100 proceeds to a decision flow of a countermeasure (S50). Specifically, the tire maintenance support system 100 executes the selection of the rotation plan described below, and the calculation process of the necessary re-tread and the necessary re-side amount.

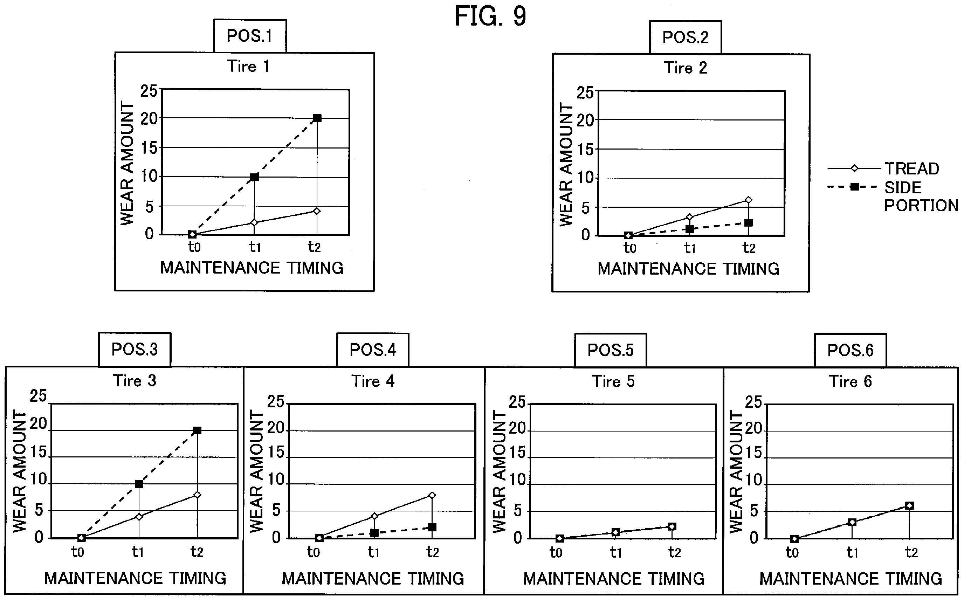

Fig. 9 is a graph illustrating the predicted wear amount in each mount position in the bus 10. That is, Fig. 9 shows the predicted wear amount after the wear amount prediction flow shown in Fig. 5 is executed. POS. 1 to 6 shown in Fig. 9 indicate the mount positions in bus 10 (see Fig. 3). Here, Tire 1 to 6 (specific identifier of each tire 30) are mounted to POS. 1 to 6, respectively.

Further, t0 denotes the timing (for example, January, 2017) before the maintenance timing t1, and all tires 30 mounted to POS. 1 to 6 are new (no wear) at the timing t0.

Here, the tire 30 is not necessarily new, but all tires 30 are set to be new for convenience of description.

The maintenance timing (t1, t2) is the timing of the regular inspection of the bus 10. For example, the maintenance timing (t1, t2) denotes the timing of the legal inspection performed at every three months (t1 is March, 2017, and t2 is June, 2017).

As shown in Fig. 9, in each of POS. 1 and POS. 3 (left side), the side portion 32 at the outer side of the vehicle is worn severely. This is because the side portion 32 is rubbed with a curbstone when the bus 10 repeatedly stops at the bus stops.

(2. 2) Selection of rotation plan

In the present embodiment, the tire maintenance support system 100 selects two kinds of the rotation plans based on different criteria. Hereinafter, a selective flow is described with reference to an operation example 1 and an operation example 2.

(2. 2. 1) Operation example 1

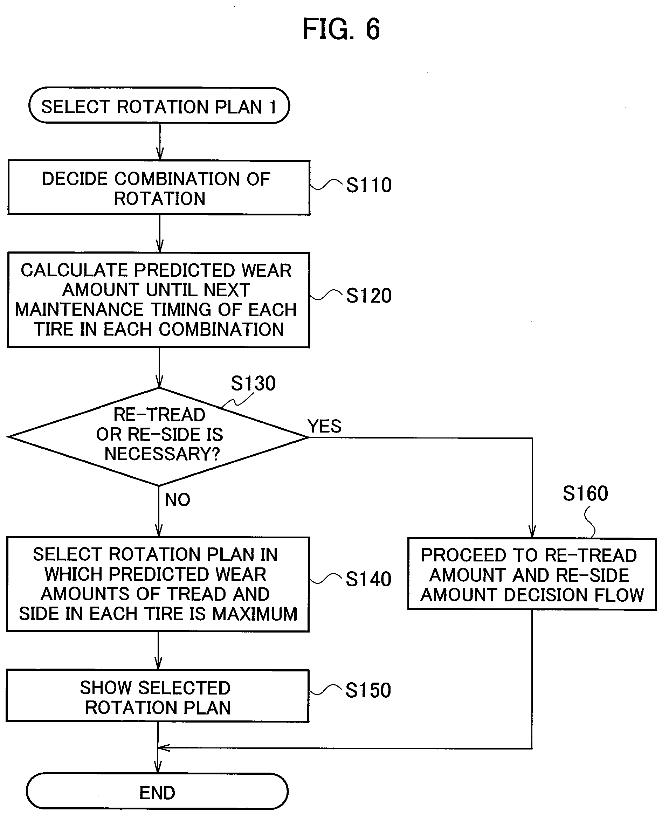

Fig. 6 is a flow chart illustrating the selective flow (operation example 1) of the rotation plan of the tires 30. As shown in Fig. 6, the tire maintenance support system 100 decides combinations (maximum 720 combinations) of the mount positions and the tires 30 (Tire 1 to 6) to be subjected to the rotation, based on POS. 1 to 6 and Tire 1 to 6 (S110). Here, the tire maintenance support system 100 can exclude the combination in which the rotation is difficult due to difference in specifications of the tires.

The tire maintenance support system 100 calculates the predicted wear amount until the next maintenance timing (t1 or t2) of each of Tire 1 to 6 in each combination (S120).

Table 1 shows the predicted wear amounts (tread 31 and side portion 32) until the maintenance timing t2 in each combination of the rotation. Here, the value in Table 1 shows the predicted wear amount, however it is not always equal to a specific value (for example, unit of millimeter).

## Table 1

Rotation Plan

| | #1 | #2 | #3 | #4 | | #9 | #10 | #11 | #12 | #13 | #14 | | #19 | #20 | #21 | #22 | #23 | #24 |
|---|---|---|---|---|---|---|---|---|---|---|---|---|---|---|---|---|---|---|
| Tire#2 | POS1 | POS1 | POS1 | POS1 | | POS2 | POS2 | POS2 | POS2 | POS3 | POS3 | | POS4 | POS4 | POS4 | POS4 | POS4 | POS4 |
| Tread | 5 | 5 | 5 | 5 | | 6 | 6 | 6 | 6 | 7 | 7 | | 7 | 7 | 7 | 7 | 7 | 7 |
| Side | 11 | 11 | 11 | 11 | | 2 | 2 | 2 | 2 | 11 | 11 | | 2 | 2 | 2 | 2 | 2 | 2 |
| δ | 6 | 6 | 6 | | | 4 | 4 | 4 | 4 | 4 | | | 5 | 5 | 5 | 5 | 5 | 5 |
| Tire#4 | POS2 | POS2 | POS3 | POS | | POS3 | POS3 | POS4 | POS4 | POS1 | POS1 | | POS1 | POS1 | POS2 | POS2 | POS3 | POS3 |
| Tread | 7 | 7 | 8 | | | 8 | 8 | 8 | 8 | 6 | | | 6 | 6 | 7 | 7 | 8 | 8 |
| Side | 2 | 2 | 11 | 11 | | 11 | 11 | 2 | 2 | 11 | 11 | | 11 | 11 | 2 | 2 | 11 | 11 |
| δ | 5 | 5 | 3 | 3 | | 5 | 3 | 6 | 6 | 5 | | | 5 | 5 | 5 | 5 | 3 | 3 |
| Tire#5 | POS3 | POS4 | POS2 | POS | | POS1 | POS4 | POS1 | POS3 | POS2 | POS | | POS2 | POS3 | POS1 | POS3 | POS1 | POS2 |
| Tread | 5 | 5 | 4 | | | 3 | 5 | 3 | 5 | 4 | | | 4 | 5 | 3 | 11 | 3 | 4 |
| Side | 11 | 2 | 2 | | | 11 | 2 | 11 | 11 | 2 | | | 2 | 11 | 11 | 5 | 11 | 2 |
| δ | 6 | 3 | 2 | | | 8 | 3 | 8 | 6 | 2 | | | 2 | 6 | 8 | 6 | 8 | 2 |
| Tire#6 | POS4 | POS3 | POS4 | PO | | POS4 | POS1 | POS3 | POS1 | POS4 | POS | | POS3 | POS2 | POS3 | POS1 | POS2 | POS1 |
| Tread | 7 | 7 | 7 | | | 7 | 5 | 7 | 5 | 7 | | | 7 | 6 | 7 | 5 | 6 | 5 |
| Side | 4 | 13 | 4 | | | 4 | 13 | 13 | 13 | 4 | | | 13 | 4 | 13 | 13 | 4 | 13 |
| δ | 3 | 6 | 3 | | | 3 | 8 | 6 | 8 | 3 | | | 6 | 2 | 6 | 8 | 2 | 8 |

Table 1 shows a part of the combinations of the rotation relating to Tire 2, 4, 5, 6. As described above, the side portion 32 is severely worn in POS. 1 and POS. 3, and therefore the tires 30 mounted to POS. 1 and POS. 3 are replaced with new tires 30 or subjected to the re-side at the maintenance timing t1.

However, the tire maintenance support system 100 may calculate the predicted wear amounts of the tread 31 and the side portion 32 in each mount position in all applicable combinations of the rotation by executing the process of S120.

The tire maintenance support system 100 determines whether the re-tread or the re-side, or both of them are necessary in Tire 1 to 6, based on the calculated predicted wear amount in each combination of the rotation (S130). Specifically, the tire maintenance support system 100 determines that the re-tread or the re-side is necessary when the predicted wear amount exceeds the predetermined limit value TH as described above.

In a case in which the re-tread or the re-side is not necessary, the tire maintenance support system 100 selects the rotation plan in which the total $W_{T+S}$ of the predicted wear amounts of the tire 30, namely the tread 31 and the side portion 32 in each Tire 1 to 6, is maximum (S140).

The tire maintenance support system 100 shows the selected rotation plan (S150). Specifically, the tire maintenance support system 100 displays the selected rotation plan on the display 107 or informs the rotation plan to other system or the like through the external IF 109 (through communication network).

On the other hand, in a case in which the re-tread or the re-side is necessary, the tire maintenance support system 100 proceeds to a decision flow of the re-tread amount and the re-side amount (S160).

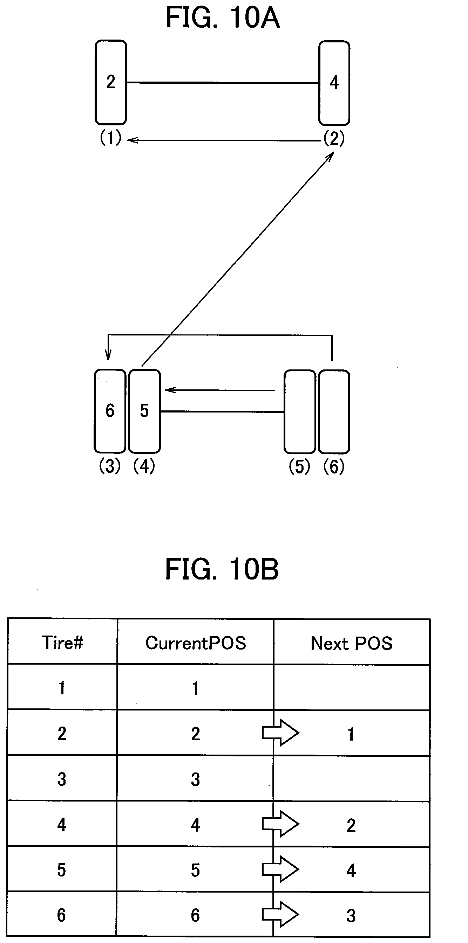

Fig. 10A and Fig. 10B shows a rotation example (operation example 1) of the tires 30. Specifically, Fig. 10A and Fig. 10B show a case in which Plan #2 shown in Table 1 is selected.

Fig. 10A shows a specific content of the rotation. An arrow indicates a destination of Tire (destination in the rotation). Fig. 10B shows a display example of the rotation plan.

As shown in Fig. 10A and Fig. 10B, Tire 2 mounted to POS. 2 is moved to POS. 1. Similarly, Tire 4 mounted to POS. 4 is moved to POS. 2. Tire 5, 6 are moved similarly. A user or an operator performs the rotation of the tires 30 with reference to the display example shown in Fig. 10B.

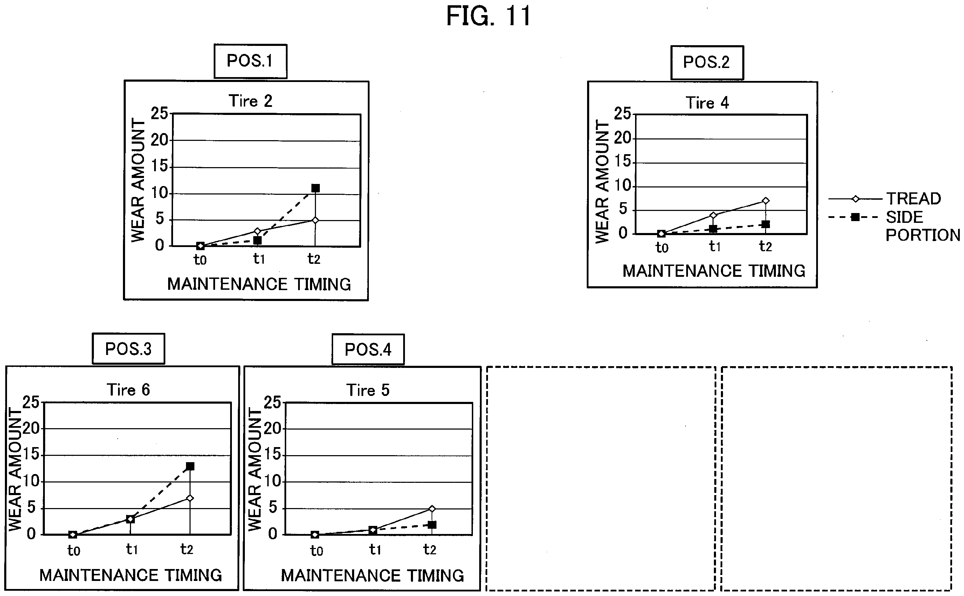

Fig. 11 is a graph illustrating the predicted wear amount in each mount position when the rotation of the tires 30 according to the rotation plan of the operation example 1 is performed. As shown in Fig. 11, Tire 2, 6 mounted to the mount positions (POS. 2, 6) at the right side of the bus 10 are moved to the mount positions (POS. 1, 3) at the left side of the bus 10.

As a result, the total $W_{T+S}$ of Tire 6 becomes 20 (tread 31 + side portion 32 = 7 + 13), which is the maximum. Further, as described above, the rotation plan in which the total $W_{T+S}$ becomes maximum is present (for example, Plan #5) other than Plan #2. The tire maintenance support system 100 may select Plan #5 based on the operation load of the rotation.

(2. 2. 2) Operation example 2

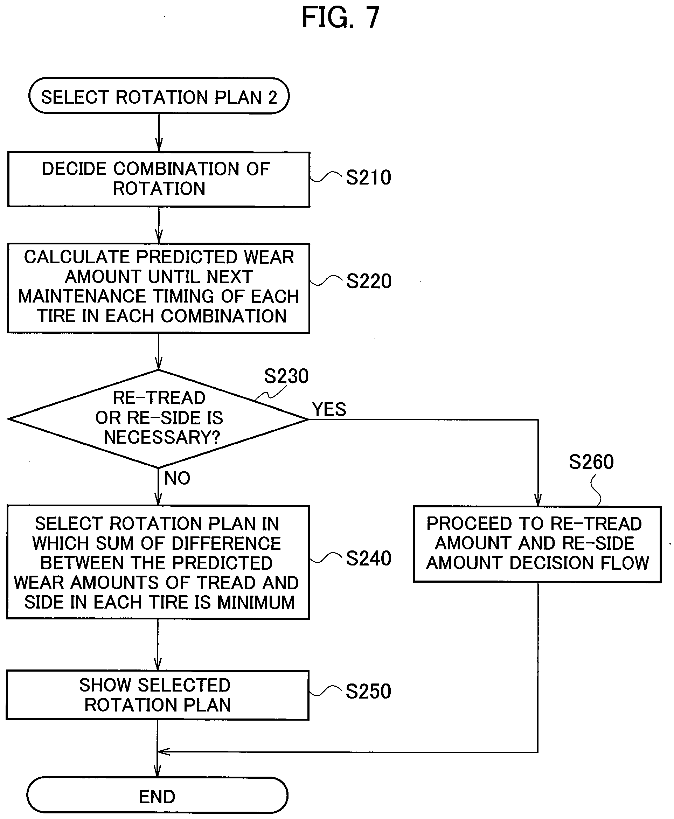

Fig. 7 is a flow chart illustrating a selective flow (operation example 2) of the rotation plan of the tires 30. Hereinafter, a configuration of the operation example 2 different from that of the operation example 1 described above is mainly described, and therefore a description of a similar configuration is omitted as needed.

The processes of S210 to S230 shown in Fig. 7 are similar to the processes of S110 to S130 shown in Fig. 6. As shown in Fig. 7, in a case in which the re-tread or the re-side is not necessary, the tire maintenance support system 100 selects the rotation plan in which the sum $\delta$ of the differences between the predicted wear amount of the tread 31 and the predicted wear amount of the side portion 32 in the tires 30, namely Tire 1 to 6, is minimum (S240).

The processes of S250 and S260 are similar to the processes of S150 and S160 shown in Fig. 6, respectively.

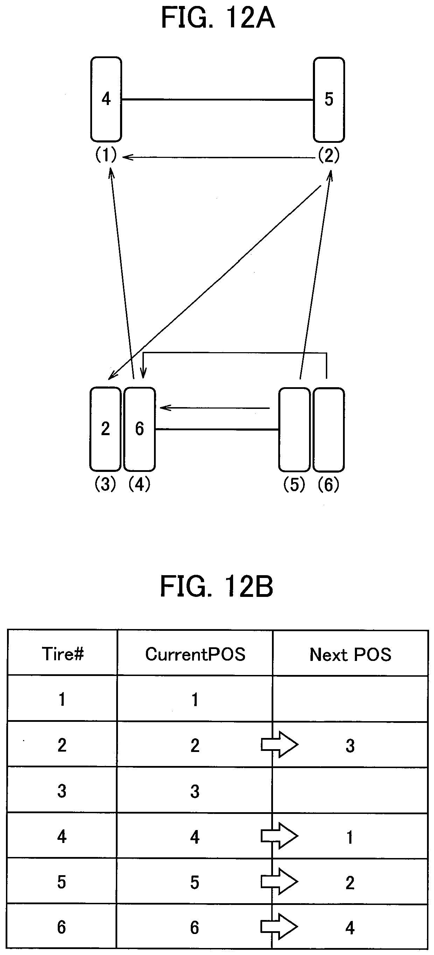

Fig. 12A and Fig. 12B shows a rotation example (operation example 2) of the tires 30. Specifically, Fig. 12A and Fig. 12B show a case in which Plan #13 shown in Table 1 is selected. Fig. 12A shows a specific content of the rotation. An arrow indicates a destination of Tire (destination in the rotation). Fig. 12B shows a display example of the rotation plan.

As shown in Fig. 12A and Fig. 12B, Tire 2 mounted to POS. 2 is moved to POS. 3. Similarly, Tire 4 mounted to POS. 4 is moved to POS. 1. Tire 5, 6 are moved similarly. A user or an operator performs the rotation of the tires 30 with reference to the display example shown in Fig. 12B.

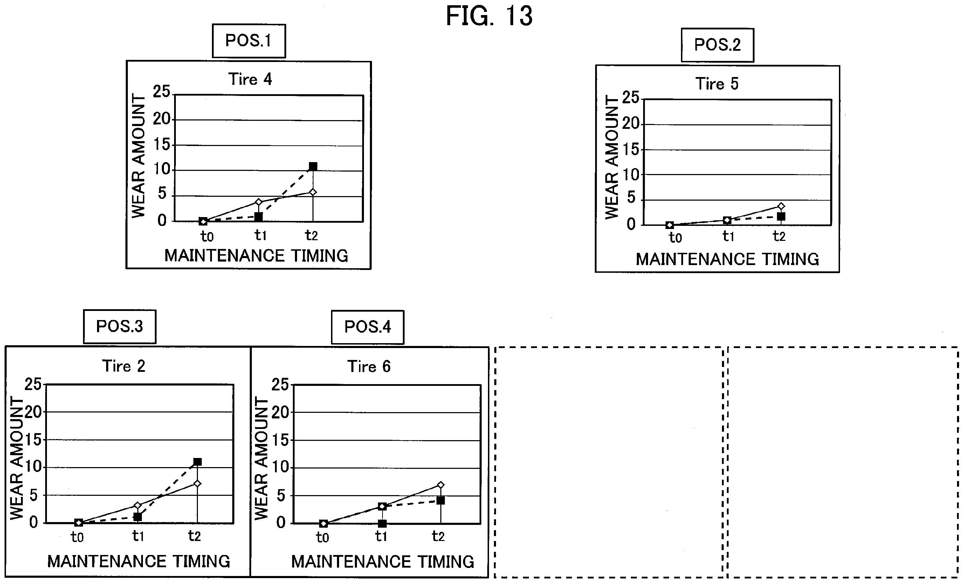

Fig. 13 is a graph illustrating the predicted wear amount in each mount position when the rotation of the tires 30 according to the rotation plan of the operation example 2 is performed. As shown in Fig. 13, Tire 2 mounted to the mount position (POS. 2) at the right side of the bus 10 is moved to the mount position (POS. 3) at the left side of the bus 10. Further, Tire 4 mounted to the mount position (POS. 4) at the rear inner side of the vehicle is moved to the mount position (POS. 1) at the left side of the bus 10. Further, Tire 5, 6 are moved to POS. 2, 4, respectively.

As a result, the sum $\delta$ of the differences becomes 14 (4 + 5 + 2 + 3), which is minimum. Further, as described above, the rotation plan in which the sum $\delta$ of the differences becomes minimum exists (for example, Plan #3) other than Plan #13. The tire maintenance support system 100 may select Plan #3 based on the operation load of the rotation.

(2. 3) Calculation of necessary re-tread amount and necessary re-side amount

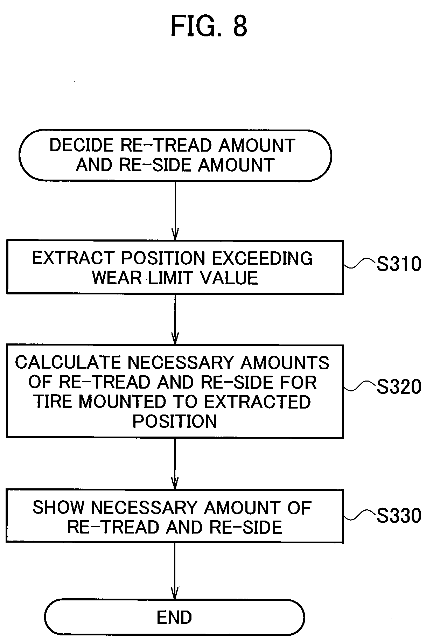

Fig. 8 is a flow chart illustrating a decision operation flow of the re-tread amount and a re-side amount. As shown in Fig. 8, the tire maintenance support system 100 extracts the mount position in which the predicted wear amount exceeds the predetermined limit value TH (wear limit value) (S310).

Hereinafter, it is supposed that the rotation plan of Plan #2 (see Table 1) is selected and the predetermined limit value TH is 8 (hereinafter, referred to as 8u for convenience of description). Further, it is supposed that this operation flow is executed at the maintenance timing t1. That is, the bus 10 to which the tires 30 are mounted, traveled until the maintenance timing t1, and Tire 1 to 6 were worn by amounts corresponding to the wear amounts shown in Fig. 9, respectively.

As a result, the targets for the re-side at the maintenance timing t2 are the side portion 32 of Tire 2 (predicted wear amount = 11u) and the side portion 32 of Tire 6 (predicted wear amount = 13u), which exceed the predetermined limit value TH of 8u.

That is, since the time (downtime) in which the bus 10 is unavailable in the bus service due to the maintenance of the tire 30 such as the rotation of the tires 30 and the re-side of the tire 30, cannot be secured in a period between the maintenance timing t1 and the maintenance timing t2, the re-side operation is preventively performed at the maintenance timing t1.

The tire maintenance support system 100 calculates the necessary amounts of the re-tread or the re-side for the tire (Tire 2, 6) mounted to the extracted mount position (S320). Specifically, the tire maintenance support system 100 calculates the re-side amount of 4u for Tire 2 and the re-side amount of 6u for Tire 6.

More specifically, the tire maintenance support system 100 calculates the re-side amount of each Tire 2, 6 in the following way.

$$\text{Re-side amount} = (\text{Predicted wear amount at t2}) - (\text{Predetermined limit value TH}) + \Delta \ (\text{Margin})$$

Thus, Tire 2 is calculated by 4u = 11u - 8u + 1u, and Tire 6 is calculated by 6u = 13u - 8u + 1u. As a result, after the re-side operation is performed at the maintenance timing t1, a re-side thickness of Tire 2 becomes (x - 1 + 4), and a re-side thickness of Tire 6 becomes (x - 3 + 6). Here, x denotes a re-side thickness of a new tire, and x is set to, for example, 9u.

The tire maintenance support system 100 shows the calculated necessary amounts of the re-tread and the re-side (S330). Specifically, the tire maintenance support system 100 displays the calculated necessary amounts of the re-tread and the re-side on the display 107 or informs the necessary amounts of the re-tread and the re-side to other system or the like through the external IF 109 (through communication network).

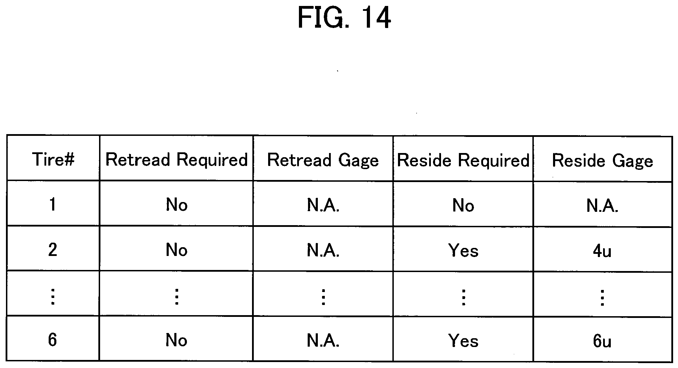

Fig. 14 is a view illustrating a display example of the necessary amounts of the re-tread and the re-side. As shown in Fig. 14, it is displayed that the re-side for Tire 2, 6 is necessary and the re-tread is not necessary. A user or an operator prepares the re-tread operation or the re-side operation with reference to the display example shown in Fig. 14.

(3) Functions and effects

According to the embodiment described above, the following functions and effects can be obtained. Specifically, the tire maintenance support system 100 calculates the predicted wear amount in each mount position until the maintenance timing (t1, t2) of the bus 10, based on the wear progress degree of the tire 30 in accordance with the travelling state of the tire 10.

Further, the tire maintenance support system 100 may select the rotation plan in which the total $W_{T+S}$ of the predicted wear amounts of the tread 31 and the side portion 32 in the tire 30 is maximum. Or alternatively, the tire maintenance support system 100 may select the rotation plan in which the sum $\delta$ of the differences between the predicted wear amount of the tread 31 and the predicted wear amount of the side portion 32 in the tires 30 mounted to respective mount positions (POS. 1 to 6) is minimum.

In this way, according to the tire maintenance support system 100, the predicted wear amount in each mount position can be calculated, and thereby a planning of a maintenance plan of the tires 30 considering the maintenance timing (t1, t2) of the bus 10 can be supported. That is, according to such a maintenance plan of the tires 30, the time (downtime) in which the bus 10 is unavailable in the bus service caused by only the maintenance of the tires 30 can be avoided.

That is, according to the tire maintenance support system 100, the downtime of the bus 10 (vehicle) due to the maintenance of the tires 30 can be minimized, and the appropriate maintenance of the tires 30 considering the wear of the tread 31 and the side portion 32 can be supported.

Further, according to the tire maintenance support system 100, in a case in which the re-tread or the re-side is necessary, namely in a case in which the member (rubber for the re-tread or rubber for the re-side) of the tread 31 or the side portion 32 is replaced, the necessary thickness of the member can be selected based on the calculated predicted wear amount. Specifically, in a case in which the predicted wear amount exceeds the predetermined limit value TH (wear limit value), the thickness of the member corresponding to the difference between the predetermined limit value TH and the predicted wear amount may be selected (the thickness may include a margin or may be set to the difference itself).

Thus, the member having a necessary minimum thickness such that the wear amount does not exceed the predetermined limit value TH until the next maintenance timing, can be selected. By repeating the re-tread and the re-side using such selected members, the wear amount of all tires 30 are substantially equal to the predetermined limit value TH at the maintenance timing theoretically.

That is, the maintenance of the tires 30 such as the re-tread of the tire 30, the re-side or the tire 30, and the replacement of the tire 30 with the new tire, can be securely performed at the same timing as the maintenance timing of the bus 10.

(4) Other embodiments

As described above, the contents of the present invention are described with reference to the examples, however the present invention is not limited to those descriptions. It is obvious for a person skilled in the art to adopt various modifications and improvement.

For example, in the embodiment described above, the re-tread operation or the re-side operation of the tire 30 in which the re-tread or the re-side is necessary is performed after the rotation plan is selected, however, the rotation plan is not necessarily selected. That is, in a case in which the predicted wear amount exceeds the predetermined limit value TH without performing the rotation, the re-tread operation or the re-side operation may be performed in accordance with the decision operation flow of the re-tread amount and the re-side amount described above (see Fig. 8).

Further, in the embodiment described above, the rotation of the tires 30 is performed within one single vehicle (bus 10), however the rotation of the tires 30 may be performed among several vehicles. In particular, the same type of vehicle travels on substantially the same route in the route bus service, and therefore the rotation of the tires 30 may be performed among several vehicles.

In the embodiment described above, the rubber for the re-side may not be formed of a rubber material, and therefore the rubber for the re-side may be formed of a synthetic resin material. In such a case, the member for the re-side may be bonded on the side portion 32.

In the embodiment described above, the bus 10 is served as a route bus having an internal combustion engine (including hybrid engine), however any vehicle other than a bus may be adopted as long as the vehicle having tires repeatedly stops at the stops. Examples of the vehicle include a trolley bus and a minivan.

In a case in which a spare tire mounted to the bus 10 (vehicle) is the same kind of tire as the tire mounted to the axle of the vehicle so as to be used for travelling, the spare tire may be included in the target tires of the rotation. Thus, in such a case, the target tires of the rotation include not only the tires mounted to the front axle 20F and the rear axle 20R of the vehicle so as to be used for travelling but also the spare tire mounted to the vehicle.

Further the function of the tire maintenance support system 100 described above may be provided as a program (software) executed by a computer.

As described above, the embodiments of the present invention are described, however the present invention is not limited to the description and the drawings forming a part of the present disclosure. Various modifications, examples, and operation techniques will be apparent from the present disclosure to a person skilled in the art.

[Industrial Applicability]

The tire maintenance support system, the tire maintenance support program, and the tire maintenance support method described above are useful to support appropriate maintenance of the tires considering the wear of the tread and the side portion while minimizing the downtime of the vehicle due to the maintenance.

[Reference Signs List]

| | |
|---|---|
| 10: | bus |
| 20F: | front axle |
| 20R: | rear axle |
| 30: | tire |
| 31: | tread |
| 31a: | re-tread portion |
| 32: | side portion |

32a:     re-side portion
100:     tire maintenance support system
101:     processor
103:     memory
105:     input device
107:     display
109:     external IF
110:     wear progress degree acquisition portion
120:     wear amount calculation portion
130:     rotation plan selection portion
140:     re-tread member selection portion
150:     re-side member selection portion

**Claims**

1. A tire maintenance support system that supports maintenance of tires mounted to predetermined positions in a vehicle having a plurality of mount positions, the tire maintenance support system comprising:

   a wear progress degree acquisition portion that acquires a wear progress degree of each of a tread and a side portion in each mount position, based on a wear amount of the tire mounted to the predetermined position within a predetermined period;
   a wear amount calculation portion that calculates a predicted wear amount, which is a wear amount of each of the tread and the side portion in each mount position until maintenance timing when maintenance of the vehicle is performed, based on the wear progress degree acquired by the wear progress degree acquisition portion; and
   a replacement member selection portion that selects a thickness of a member to be needed when at least one of the tread and the side portion is replaced, based on the predicted wear amount calculated by the wear amount calculation portion,
   wherein, in a case in which the predicted wear amount exceeds a predetermined limit value, the replacement member selection portion selects the thickness of the member corresponding to a difference between the predetermined limit value and the predicted wear amount.

2. The tire maintenance support system according to claim 1, further comprising a rotation plan selection portion that selects at least one rotation plan, which is a plan for switching the tire mounted at the predetermined position into another mount position, among the rotation plans, based on the predicted wear amount calculated by the wear amount calculation portion,
   wherein in a case in which the predicted wear amount exceeds the predetermined limit value in the rotation plan selected by the rotation plan selection portion, the replacement member selection portion selects the thickness of the member corresponding to the difference between the predetermined limit value and the predicted wear amount.

3. The tire maintenance support system according to claim 2, wherein the rotation plan selection portion selects a rotation plan in which a total of the predicted wear amounts of the tread and the side portion in each tire is maximum.

4. The tire maintenance support system according to claim 2, wherein the rotation plan selection portion selects a rotation plan in which the sum of the differences between the predicted wear amount of the tread and the predicted wear amount of the side portion in the tires, which are mounted to the respective mount positions, is minimum.

5. The tire maintenance support system according to any one of claims 1 to 4, wherein the replacement member selection portion designates the difference between the predetermined limit value and the predicted wear amount as the thickness of the member.

6. A tire maintenance support program that supports maintenance of tires mounted to predetermined positions in a vehicle having a plurality of mount positions, the tire maintenance support program causing a computer to execute:

   a wear progress degree acquisition process that acquires a wear progress degree of each of a tread and a side portion in each mount position, based on a wear amount of each of the tire mounted to the predetermined position within a predetermined period;
   a wear amount calculation process that calculates a predicted wear amount, which is a wear amount of each of the tread and the side portion in each mount position until maintenance timing when maintenance of the vehicle is performed, based on the acquired wear progress degree; and

a replacement member selection process that selects a thickness of a member to be needed when at least one of the tread and the side portion is replaced, based on the calculated predicted wear amount,

wherein, in a case in which the predicted wear amount exceeds a predetermined limit value, the replacement member selection process selects the thickness of the member corresponding to a difference between the predetermined limit value and the predicted wear amount.

**7.** A tire maintenance support method that supports maintenance of tires mounted to predetermined positions in a vehicle having a plurality of mount positions, the tire maintenance support method comprising:

acquiring a wear progress degree of each of a tread and a side portion in each mount position, based on a wear amount of each of the tire mounted to the predetermined position within a predetermined period;

calculating a predicted wear amount, which is a wear amount of each of the tread and the side portion in each mount position until maintenance timing when maintenance of the vehicle is performed, based on the wear progress degree acquired by the wear progress degree acquisition portion; and

selecting a thickness of a member to be needed when at least one of the tread and the side portion is replaced, based on the predicted wear amount calculated by the wear amount calculation portion,

wherein, the selecting the thickness of the member includes, in a case in which the predicted wear amount exceeds a predetermined limit value, selecting the thickness of the member corresponding to a difference between the predetermined limit value and the predicted wear amount.

# FIG. 1

100

130
**ROTATION PLAN SELECTION PORTION**

110
**WEAR PROGRESS DEGREE ACQUISITION PORTION**

140
**RE-TREAD MEMBER SELECTION PORTION**

120
**WEAR MOUNT CALCULATION PORTION**

150
**RE-SIDE MEMBER SELECTION PORTION**

101
PROCESSOR

103
MEMORY

105
INPUT DEVICE

107
DISPLAY

109
EXTERNAL IF

# FIG. 2

10

20R

30  20F

# FIG. 3

30

20F

1 ⎯⎯⎯⎯⎯ 2

(1)            (2)

20R

3 4 ⎯⎯⎯⎯ 5 6

(3) (4)      (5) (6)

# FIG. 4

# FIG. 5

```
        ( PREDICT WEAR AMOUNT )
                   │
                   ▼
   ┌──────────────────────────────┐
   │   ACQUIRE WEAR PROGRESS       │
   │   DEGREE (SEVERITY) IN EACH   │── S10
   │        TIRE POSITION          │
   └──────────────────────────────┘
                   │
                   ▼
   ┌──────────────────────────────┐
   │  ACQUIRE MAINTENANCE TIMING   │── S20
   │         OF VEHICLE            │
   └──────────────────────────────┘
                   │
                   ▼
   ┌──────────────────────────────┐
   │    CALCULATE WEAR AMOUNT      │
   │  UNTIL MAINTENANCE TIMING IN  │── S30
   │      EACH TIRE POSITION       │
   └──────────────────────────────┘
                   │          S40
                   ▼
          ◇ EXCEED              NO
            WEAR LIMIT VALUE? ◇─────┐
                   │                │
                   │ YES            │
                   ▼                │
   ┌──────────────────────────────┐ │
   │ PROCEED TO COUNTERMEASURE    │── S50
   │      DECISION FLOW           │ │
   └──────────────────────────────┘ │
                   │◄───────────────┘
                   ▼
              (   END   )
```

# FIG. 6

```
┌─────────────────────────────┐
│    SELECT ROTATION PLAN 1    │
└─────────────────────────────┘
              │
              ▼
┌─────────────────────────────┐
│   DECIDE COMBINATION OF      │───S110
│         ROTATION            │
└─────────────────────────────┘
              │
              ▼
┌─────────────────────────────┐
│  CALCULATE PREDICTED WEAR    │
│    AMOUNT UNTIL NEXT         │───S120
│ MAINTENANCE TIMING OF EACH   │
│  TIRE IN EACH COMBINATION    │
└─────────────────────────────┘
              │            S130
              ▼
          ◇─────────◇
         ╱  RE-TREAD  ╲          YES
        ◇ OR RE-SIDE IS ◇─────────────┐
         ╲ NECESSARY? ╱               │
          ◇─────────◇                 │
              │                       │
             NO                  S160 │
              ▼                       ▼
┌─────────────────────────────┐  ┌──────────────────────┐
│ SELECT ROTATION PLAN IN     │  │ PROCEED TO RE-TREAD   │
│ WHICH PREDICTED WEAR        │──│ AMOUNT AND RE-SIDE    │
│ AMOUNTS OF TREAD AND   S140 │  │ AMOUNT DECISION FLOW  │
│ SIDE IN EACH TIRE IS MAXIMUM│  └──────────────────────┘
└─────────────────────────────┘          │
              │                           │
              ▼                           │
┌─────────────────────────────┐          │
│      SHOW SELECTED           │───S150   │
│      ROTATION PLAN           │          │
└─────────────────────────────┘          │
              │◄───────────────────────────┘
              ▼
┌─────────────────────────────┐
│            END               │
└─────────────────────────────┘
```

# FIG. 7

```
        ( SELECT ROTATION PLAN 2 )
                    │
                    ▼
        ┌──────────────────────┐
        │  DECIDE COMBINATION OF │── S210
        │       ROTATION         │
        └──────────────────────┘
                    │
                    ▼
        ┌──────────────────────┐
        │ CALCULATE PREDICTED WEAR│
        │   AMOUNT UNTIL NEXT     │── S220
        │ MAINTENANCE TIMING OF EACH│
        │  TIRE IN EACH COMBINATION │
        └──────────────────────┘
                    │
                    ▼         S230
              ◇───────────────◇
             ╱   RE-TREAD      ╲      YES
            ╱  OR RE-SIDE IS     ╲────────────┐
            ╲   NECESSARY?       ╱            │
             ╲─────────────────╱             │  S260
                    │ NO                      ▼
                    ▼              ┌──────────────────────┐
        ┌──────────────────────┐   │ PROCEED TO RE-TREAD   │
        │ SELECT ROTATION PLAN IN│   │  AMOUNT AND RE-SIDE   │
        │ WHICH SUM OF DIFFERENCE │   │ AMOUNT DECISION FLOW  │
        │ BETWEEN THE PREDICTED   │── S240 └──────────────────────┘
        │ WEAR AMOUNTS OF TREAD AND│           │
        │ SIDE IN EACH TIRE IS MINIMUM│        │
        └──────────────────────┘              │
                    │                          │
                    ▼                          │
        ┌──────────────────────┐              │
        │     SHOW SELECTED      │── S250       │
        │    ROTATION PLAN       │              │
        └──────────────────────┘              │
                    │◄─────────────────────────┘
                    ▼
              (    END    )
```

# FIG. 8

```
┌─────────────────────────────┐
│   DECIDE RE-TREAD AMOUNT    │
│     AND RE-SIDE AMOUNT      │
└─────────────────────────────┘
              │
              ▼
┌─────────────────────────────┐
│   EXTRACT POSITION EXCEEDING │  ──S310
│       WEAR LIMIT VALUE       │
└─────────────────────────────┘
              │
              ▼
┌─────────────────────────────┐
│  CALCULATE NECESSARY AMOUNTS │
│  OF RE-TREAD AND RE-SIDE FOR │  ──S320
│   TIRE MOUNTED TO EXTRACTED  │
│           POSITION           │
└─────────────────────────────┘
              │
              ▼
┌─────────────────────────────┐
│    SHOW NECESSARY AMOUNT OF  │  ──S330
│      RE-TREAD AND RE-SIDE    │
└─────────────────────────────┘
              │
              ▼
┌─────────────────────────────┐
│             END             │
└─────────────────────────────┘
```

# FIG. 9

POS.1 — Tire 1

POS.2 — Tire 2

POS.3 — Tire 3

POS.4 — Tire 4

POS.5 — Tire 5

POS.6 — Tire 6

TREAD
SIDE PORTION

EP 3 598 369 A1

# FIG. 10A

# FIG. 10B

| Tire# | CurrentPOS | | Next POS |
|---|---|---|---|
| 1 | 1 | | |
| 2 | 2 | ⇨ | 1 |
| 3 | 3 | | |
| 4 | 4 | ⇨ | 2 |
| 5 | 5 | ⇨ | 4 |
| 6 | 6 | ⇨ | 3 |

FIG. 11

POS.1 — Tire 2

POS.2 — Tire 4

POS.3 — Tire 6

POS.4 — Tire 5

TREAD
SIDE PORTION

WEAR AMOUNT vs. MAINTENANCE TIMING (t0, t1, t2)

## FIG. 12A

## FIG. 12B

| Tire# | CurrentPOS | | Next POS |
|---|---|---|---|
| 1 | 1 | | |
| 2 | 2 | ⇨ | 3 |
| 3 | 3 | | |
| 4 | 4 | ⇨ | 1 |
| 5 | 5 | ⇨ | 2 |
| 6 | 6 | ⇨ | 4 |

FIG. 13

# FIG. 14

| Tire# | Retread Required | Retread Gage | Reside Required | Reside Gage |
|:---:|:---:|:---:|:---:|:---:|
| 1 | No | N.A. | No | N.A. |
| 2 | No | N.A. | Yes | 4u |
| ⋮ | ⋮ | ⋮ | ⋮ | ⋮ |
| 6 | No | N.A. | Yes | 6u |

<table>
<tr><td colspan="2" align="center"><b>INTERNATIONAL SEARCH REPORT</b></td><td>International application No.<br>PCT/JP2018/008254</td></tr>
</table>

A. CLASSIFICATION OF SUBJECT MATTER
Int.Cl. G06Q30/00(2012.01)i, B60C19/00(2006.01)i, G06Q10/00(2012.01)i

According to International Patent Classification (IPC) or to both national classification and IPC

B. FIELDS SEARCHED

Minimum documentation searched (classification system followed by classification symbols)
Int.Cl. G06Q10/00-99/00, B60C19/00

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2014-51133 A (BRIDGESTONE CORPORATION) 20 March 2014, entire text, all drawings & US 2014/067599 A1 & EP 2705962 A1 & CN 103679542 A | 1-7 |
| A | JP 2006-21570 A (FUJITSU TEN LTD.) 26 January 2006, entire text, all drawings (Family: none) | 1-7 |
| A | JP 2002-131191 A (YOKOHAMA RUBBER CO., LTD.) 09 May 2002, entire text, all drawings (Family: none) | 1-7 |

☒  Further documents are listed in the continuation of Box C.          ☐   See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    15.05.2018 | Date of mailing of the international search report<br>    22.05.2018 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

**INTERNATIONAL SEARCH REPORT**

International application No.

PCT/JP2018/008254

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2009-262817 A (TOYOTA MOTOR CORPORATION) 12 November 2009, entire text, all drawings (Family: none) | 1-7 |
| A | US 2011/0153459 A1 (KIRIAN N. J.) 23 June 2011, Whole Document & WO 2012/066427 A2 & RU 2013127202 A | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2012098251 A

**Non-patent literature cited in the description**

• *Tire solution: Eco Value Pack, What is Eco Value Pack?,* 28 February 2017, https://tire.bridge-stone.co.jp/tb/truck_bus/solution/eco_value/in-dex.ht ml